# EUROPÄISCHE PATENTANMELDUNG

(11) **EP 2 239 999 A1**
(43) Veröffentlichungstag der Anmeldung: **13.10.2010**
(21) Anmeldenummer: 10156598.4
(22) Anmeldetag: 16.03.2010
(51) Int. Cl.: H05B 37/02, H05B 41/285

(54) **Schnittstelle zum Ansteuern eines elektronischen Vorschaltgeräts**

(30) Priorität: 08.04.2009 DE 102009016904
(71) Anmelder: OSRAM Gesellschaft mit beschränkter Haftung, 81536 München (DE)
(72) Erfinder: Skatulla, Marcus, 83374 Traunwalchen (DE)

(57) **Zusammenfassung**

Die vorliegende Erfindung betrifft eine Schnittstelle (10) zum Ansteuern eines elektronischen Vorschaltgeräts (22), das zum Betreiben mindestens eines Leuchtmittels ausgelegt ist, wobei die Schnittstelle (10) umfasst: Einen Steuereingang mit einem ersten (SA1) und einem zweiten Steueranschluss (SA2) zum Koppeln mit zumindest einem Netztaster (14), einem Ausgang mit einem ersten (A1) und einem zweiten Ausgangsanschluss (A2) zum Übergeben von Steuersignalen an das elektronische Vorschaltgerät (22), und eine Verarbeitungsvorrichtung (18, 20, OPT1, OPT2, C1, Z1, R2, C2, R3, S1), die zwischen den Steuereingang (SA1, SA2) und den Ausgang (A1, A2) gekoppelt ist, wobei die Verarbeitungsvorrichtung (18, 20, OPT1, OPT2, C1, Z1, R2, C2, R3, S1) eine Umpolvorrichtung (18) umfasst, die ausgelegt ist, ein am Steuereingang (SA1, SA2) angelegtes Signal in eine vorgebbare Polung zu bringen, wobei seriell zu zumindest einem der Steueranschlüsse (SA1; SA2) ein PTC-Element (16) gekoppelt ist.

## Beschreibung

### Technisches Gebiet

Die vorliegende Erfindung betrifft eine Schnittstelle zum Ansteuern eines elektronischen Vorschaltgeräts, das zum Betreiben mindestens eines Leuchtmittels ausgelegt ist, wobei die Schnittstelle Folgendes umfasst: einen Steuereingang mit einem ersten und einem zweiten Steueranschluss zum Koppeln mit einem Netztaster, einen Ausgang mit einem ersten und einem zweiten Ausgangsanschluss zum Übergeben von Steuersignalen an das elektronische Vorschaltgerät, und eine Verarbeitungsvorrichtung, die zwischen den Steuereingang und den Ausgang gekoppelt ist, wobei die Verarbeitungsvorrichtung eine Umpolvorrichtung umfasst, die ausgelegt ist, ein am Steuereingang angelegtes Signal in eine vorgebbare Polung zu bringen.

### Stand der Technik

Problematisch an einer derartigen, aus dem Stand der Technik bekannten Schnittstelle ist der Umstand, dass bei einem Kurzschluss innerhalb der Schnittstelle und gleichzeitig zwischen dem ersten und dem zweiten Steueranschluss angelegter Netzspannung, insbesondere durch Betätigen des Netztasters, eine vorgeschaltete Haussicherung, die beispielsweise 16 A betragen kann, auslöst. Ist keinerlei Sicherungselement in der Schnittstelle vorgesehen, so wird die Haussicherung mit jeder neuen Betätigung des Netztasters ausgelöst. Dies ist selbstverständlich unerwünscht.

Um dies zu verhindern, ist die Verwendung von Sicherungswiderständen, Leiterbahnsicherungen und Topf- oder Glassicherungen aus dem Stand der Technik bekannt. Nachteilig an diesen bekannten Lösungen ist, dass selbst bei einem lediglich kurzzeitigen Funktionsfehler in der Schnittstelle das entsprechende Sicherungselement irreversibel ausgelöst hat, obwohl die Schnittstelle an und für sich noch funktionsfähig geblieben ist. Je nach dem, welches Sicherungselement im Stand der Technik gewählt wurde, ist danach das Sicherungselement zu wechseln oder die Schnittstelle unbrauchbar.

### Darstellung der Erfindung

Die Aufgabe der vorliegenden Erfindung besteht deshalb darin, eine gattungsgemäße Schnittstelle derart weiterzubilden, dass einerseits das Netz, mit dem die Schnittstelle betrieben wird, zuverlässig vor einem Fehler in der Schnittstelle geschützt wird, andererseits die Schnittstelle betriebsbereit bleibt für den Fall, dass der Fehler in der Schnittstelle nur kurzzeitig aufgetreten ist, das heißt nicht permanent vorliegt.

Diese Aufgabe wird gelöst durch eine Schnittstelle mit den Merkmalen von Patentanspruch 1.

Der vorliegenden Erfindung liegt die Erkenntnis zugrunde, dass zwar PTC (Positive Temperature Coefficient)-Elemente, beispielsweise Kaltleiter, PTC-Widerstände oder PTC-Thermistoren, als stromleitende Materialien, die bei tiefen Temperaturen den Strom besser leiten können als bei hohen, bekannt sind, jedoch für andere Zwecke eingesetzt werden: PTC-Elemente, deren Widerstand etwa linear mit der Temperatur ansteigt, werden zur Temperaturmessung, Temperaturkompensation oder als Widerstandsthermometer verwendet. PTC-Elemente mit einem nicht linearen Widerstandsverlauf werden zum Überstromschutz, zum Übertemperaturschutz, als selbst regelndes Heizelement sowie als Schaltelement zur Entmagnetisierung von Bildröhren verwendet.

Bei allen bekannten Ausführungsformen, bei denen ein PTC-Element als Sicherungselement verwendet wird, dient das PTC-Element einem Schutz des jeweiligen Geräts vor einem Fehler von außen, beispielsweise einem Überstrom oder einer Überspannung des betreibenden Netzes. In keinem bisher bekannten Fall wird ein PTC-Element als selbst rückstellende Sicherung gegen einen insbesondere vorübergehenden Fehler innerhalb eines Geräts, vorliegend der Schnittstelle, verwendet, um dadurch Schaden nach außen, das heißt also in genau der umgekehrten Richtung wie beim Stand der Technik, abzuwenden, zum Beispiel Schäden an dem die Schnittstelle betreibenden Netz.

Die Verwendung eines PTC-Elements, das seriell zu zumindest einem der Steueranschlüsse gekoppelt ist, ermöglicht selbst bei einem dauerhaften Defekt in der Schnittstelle das wiederholte Betätigen des Netztasters, ohne dass dadurch die Sicherung des betreibenden Netzes, beispielsweise eine Haussicherung, auslösen würde. Andererseits, sofern es sich um einen vorübergehenden Funktionsfehler in der Schnittstelle handelt, ist die Schnittstelle nach dem vorübergehenden Funktionsfehler weiterhin vollständig funktionsfähig. Dies wird dadurch erreicht, dass nach dem Abkühlen des PTC-Elements die Funktion der Schnittstelle wieder uneingeschränkt möglich ist.

Bei einer bevorzugten Ausführungsform umfasst die Umpolvorrichtung einen Gleichrichter mit einem Eingang mit einem ersten und einem zweiten Gleichrichtereingangsanschluss und mit einem Ausgang mit einem ersten und einem zweiten Gleichrichterausgangsanschluss, wobei der erste Gleichrichtereingangsanschluss mit dem ersten Steueranschluss und der zweite Gleichrichtereingangsanschluss mit dem zweiten Steueranschluss gekoppelt ist. Dadurch wird eine besonders kostengünstige Möglichkeit geschaffen, das Steuersignal in beliebiger Orientierung am Steuereingang anzuschließen, ohne die Funktionsfähigkeit der Schnittstelle zu beeinträchtigen.

Gemäß einer bevorzugten Ausführungsform umfasst eine erfindungsgemäße Schnittstelle ein spannungsbegrenzendes Bauteil, insbesondere einen Varistor, eine Zenerdiode oder eine Suppressordiode, das zwischen den ersten und den zweiten Steueranschluss gekoppelt ist. Da erfindungsgemäß das PTC-Element im Fehlerfall einen Großteil der schädlichen Leistung abfängt, kann dadurch das spannungsbegrenzende Bauteil auf eine deutlich niedrigere Leistung ausgelegt und damit wesentlich kleiner dimensioniert werden als im Stand der Technik. Wenn demnach das spannungsbegrenzende Bauteil bei Auftritt einer Überspannung für einen maximalen Fehlerstrom ausgelegt ist, so kann durch das erfindungsgemäße Vorhandensein eines PTC-Elements sichergestellt werden, dass der auftretende maximale Fehlerstrom am spannungsbegrenzenden Bauteil nunmehr reduziert ist. Somit sind an das spannungsbegrenzende Bauteil geringere Anforderungen an die Stromfestigkeit zu stellen, wodurch der Preis des spannungsbegrenzenden Bauteils deutlich verringert wird. Dies resultiert in geringeren Kosten und reduziertem Bauraum.

Eine besonders signifikante Reduktion betreffend die Leistungsauslegung des spannungsbegrenzenden Bauteils lässt sich dann erzielen, wenn das PTC-Element zwischen einen Anschluss des spannungsbegrenzenden Bauteils und den ersten oder den zweiten Steueranschluss gekoppelt ist. Damit ist das PTC-Element aus Sicht des Steuereingangs quasi "vor" dem spannungsbegrenzenden Bauteil angeordnet und schützt daher das spannungsbegrenzende Bauteil besonders zuverlässig.

Die Verarbeitungsvorrichtung umfasst bevorzugt mindestens einen elektronischen Schalter, dessen Strecke Bezugselektrode - Arbeitselektrode zwischen den ersten und den zweiten Gleichrichterausgangsanschluss gekoppelt ist. Damit wird grundsätzlich eine Kommunikation von der Schnittstelle in Richtung des Steuereingangs, beispielsweise zu einem vorgeschalteten Steuergerät, ermöglicht.

Bevorzugt umfasst die Verarbeitungsvorrichtung die Serienschaltung eines ersten Optokopplers und eines spannungsbegrenzenden Energiespeichers, wobei diese Serienschaltung seriell zwischen den ersten und den zweiten Gleichrichterausgangsanschluss gekoppelt ist, wobei die Fotozelle des ersten Optokopplers zwischen den ersten und den zweiten Ausgangsanschluss gekoppelt ist. Dadurch wird auf besonders einfache Weise die Übertragung von Befehlen von der Schnittstelle auf ein nachgeschaltetes elektronisches Vorschaltgerät ermöglicht.

Um eine bidirektionale Kommunikation mit dem elektronischen Vorschaltgerät zu ermöglichen, ist bevorzugt weiterhin ein Signaleingang mit einem ersten und einem zweiten Signalanschluss zum Empfangen von Signalen vom elektronischen Vorschaltgerät vorgesehen. Zu diesem Zweck ist es besonders vorteilhaft, wenn die Verarbeitungsvorrichtung einen zweiten Optokoppler umfasst, wobei die Leuchtdiode des zweiten Optokopplers zwischen den ersten und den zweiten Signalanschluss gekoppelt ist, wobei der erste Anschluss der Fotozelle des zweiten Optokopplers mit dem spannungsbegrenzenden Energiespeicher gekoppelt ist, wobei der zweite Anschluss der Fotozelle des zweiten Optokopplers mit der Steuerelektrode des elektronischen Schalters gekoppelt ist.

Bevorzugt ist zwischen den ersten Gleichrichterausgangsanschluss und den ersten Optokoppler eine Stromquelle gekoppelt. Dadurch wird einerseits der Strom zum Übergeben von Steuersignalen an das elektronische Vorschaltgerät bereitgestellt, zum anderen der spannungsbegrenzende Energiespeicher geladen, um vom elektronischen Vorschaltgerät empfangene Signale durch entsprechende Ansteuerung des elektronischen Schalters an das Steuergerät weiterzuleiten, das am Steuereingang der Schnittstelle angeschlossen ist.

Besonders bevorzugt ist das PTC-Element ein PPTC (Polymeric Positive Temperature Coefficient)-Element. Dabei handelt es sich um einen Kunststoff, der mit winzigen Rußpartikeln befüllt ist. Insbesondere für den Fall, dass der Steuereingang weiterhin zum Koppeln mit einem Steuergerät, insbesondere einem DALI-Steuergerät (Digital Accessable Lighting Interface), ausgelegt ist, könnte ein PTC-Element auf Keramikbasis seiner erfindungsgemäß gewünschten Funktion nur schwerlich nachkommen. Zunächst sind PTC-Elemente auf Keramikbasis in dem gewünschten niederohmigen Bereich kaum verfügbar. Diejenigen, die verfügbar sind, zeichnen sich durch eine große Masse aus und erlauben deshalb kein Ansprechen, das schnell genug wäre, um die Sicherung des betreibenden Netzes zu schützen. Erst mit der Verwendung eines PPTC-Elements werden Zeitkonstanten erreicht, die klein genug sind, um eine außerhalb der Schnittstelle vorgesehene Sicherung innerhalb des die Schnittstelle betreibenden Netzes vor einem Auslösen zu sichern. Überdies zeichnen sich PPTC-Elemente durch einen äußerst kleinen Bauraum aus.

Im Falle des bereits erwähnten, zusätzlich am Steuereingang, beispielsweise parallel zum Netztaster, angeschlossenen DALI-Steuergeräts, bewirkt das PTC-Element überdies eine Schutzfunktion für die Schnittstelle, falls der Ausgangsstrom des Steuergeräts aufgrund eines Fehlers innerhalb des Steuergeräts die dafür vorgesehene Schwelle, beispielsweise 250 mA, überschreitet.

Bevorzugt ist das PTC-Element derart dimensioniert, dass bei einem Kurzschluss innerhalb der Schnittstelle und gleichzeitig zwischen dem ersten und dem zweiten Steueranschluss angelegter Netzspannung der Eingangsstrom auf einen vorgebbaren Grenzwert begrenzt wird. Dadurch wird zuverlässig sichergestellt, dass, wenn der vorgebbare Grenzwert dem Wert der Sicherung des betreibenden Netzes angepasst ist, ein Auslösen der Sicherung infolge eines Kurzschlusses innerhalb der Schnittstelle verhindert wird.

Besonders bevorzugt ist deshalb der vorgebbare Grenzwert kleiner gleich dem Sicherungswert einer Sicherung des Speisenetzes der Schnittstelle.

Unter der Annahme, dass die Schnittstelle auf einen maximalen Stromwert ausgelegt ist, ist es besonders vorteilhaft, wenn das PTC-Element derart dimensioniert ist, dass bei fehlerhafter Strombegrenzung des an den Steuereingang anzukoppelnden Steuergeräts dieser maximale Stromwert nicht überschritten wird. Damit dient das PTC-Element gleichzeitig der Verhinderung einer Zerstörung der Schnittstelle bei fehlerhaftem Steuergerät.

Weitere vorteilhafte Ausführungsformen ergeben sich aus den Unteransprüchen.

### Kurze Beschreibung der Zeichnung(en)

Im Nachfolgenden wird ein Ausführungsbeispiel einer erfindungsgemäßen Schnittstelle unter Bezugnahme auf die beigefügte Zeichnung näher beschrieben. Diese zeigt in schematischer Darstellung ein Ausführungsbeispiel einer erfindungsgemäßen Schnittstelle.

### Bevorzugte Ausführung der Erfindung

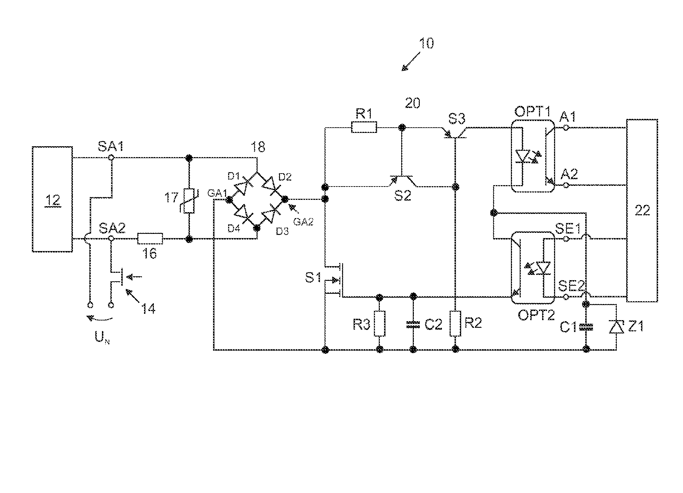

Fig. 1 zeigt in schematischer Darstellung ein Ausführungsbeispiel einer erfindungsgemäßen Schnittstelle 10. Diese weist einen Steuereingang auf mit einem ersten SA1 und einem zweiten Steueranschluss SA2. Mit dem Steuereingang SA1, SA2 ist einerseits ein DALI-Steuergerät 12, andererseits ein Netztaster 14 gekoppelt, wobei der Netztaster 14 mit einer Netzspannung U_{N} eines Betreibernetzes gekoppelt ist. Im nicht gezeigten Betreibernetz kann eine Sicherung vorgesehen sein, die beispielsweise bei einem Strom von mehr als 16 A auslöst. Vorliegend ist seriell zum Steueranschluss SA2 ein PPTC-Element 16 angeordnet. Zwischen das PPTC-Element 16 und den Steueranschluss SA1 ist ein Gleichrichter 18 gekoppelt, der vier Dioden D1 bis D4 umfasst. Parallel zum Eingang des Gleichrichters 18 ist ein spannungsbegrenzendes Bauteil, vorliegend ein Varistor 17, gekoppelt.

Zwischen einen ersten GA1 und einen zweiten Gleichrichterausgangsanschluss GA2 ist ein Schalter S1 gekoppelt, insbesondere dessen Strecke Arbeitselektrode - Bezugselektrode. Mit dem Gleichrichterausgangsanschluss GA2 ist überdies eine Stromquelle 20 gekoppelt, die zwei Bipolartransistoren S2, S3 sowie zwei ohmsche Widerstände R1, R2 umfasst. Mit dem Ausgang der Stromquelle 20 ist ein erster Optokoppler OPT1 gekoppelt, der in Serie zur Parallelschaltung eines Kondensators C1 und einer Zenerdiode Z1 gekoppelt ist. Diese versorgen einen zweiten Optokoppler OPT2.

Beide Optokoppler OPT1, OPT2 sind mit einem elektronischen Vorschaltgerät 22 gekoppelt, wobei der Optokoppler OPT1 über einen Ausgang der Schnittstelle 10 mit einem ersten A1 und einem zweiten Ausgangsanschluss A2 zum Übergeben von Signalen an das elektronische Vorschaltgerät 22 mit diesem gekoppelt ist, wobei der zweite Optokoppler OPT2 über einen Signaleingang mit einem ersten SE1 und einem zweiten Signalanschluss SE2 zum Empfangen von Signalen vom elektronischen Vorschaltgerät 22 mit Letzterem gekoppelt ist.

Der Ausgang des Optokopplers OPT2 ist mit der Steuerelektrode des Schalters S1 verbunden. Parallel zur Steuerelektrode des Schalters S1 ist die Parallelschaltung eines ohmschen Widerstands R3 und eines Kondensators C2 gekoppelt, die als Störfilter wirken.

Das Steuergerät 12 ist bevorzugt ausgelegt auf einen Maximalstrom von 250 mA. Die Schnittstelle 10 selbst entnimmt beim Hören dem Steuergerät 12 einen Strom von maximal 2 mA. Der Widerstand des PPTC-Elements beträgt in einem bevorzugten Ausführungsbeispiel bei 20°C 2 Ω, bei 85°C 5 Ω. Der Schalter S1 weist bevorzugt eine Blockierfähigkeit von 600 V auf. Die Zenerdiode Z1 ist bevorzugt auf eine Spannung von 5,6 V dimensioniert.

Vorliegend ist das PPTC-Element 16 "vor" dem Varistor 17 angeordnet, bietet deshalb Schutz für alle nachfolgenden Elemente. Das PPTC-Element 16 könnte selbstverständlich auch zwischen dem Varistor 17 und dem Gleichrichter 18 oder sogar nach dem Gleichrichter 18 angeordnet sein, wobei dann jedoch nur die nachgeordneten Elemente vor einem Fehler des Steuergeräts 12 geschützt wären. Im letztgenannten Fall könnte ein Fehler im Gleichrichter 18 ein Auslösen der Sicherung im betreibenden Netz verursachen.

## Patentansprüche

1. Schnittstelle (10) zum Ansteuern eines elektronischen Vorschaltgeräts (22), das zum Betreiben mindestens eines Leuchtmittels ausgelegt ist, wobei die Schnittstelle (10) umfasst:
- einen Steuereingang mit einem ersten (SA1) und einem zweiten Steueranschluss (SA2) zum Koppeln mit zumindest einem Netztaster (14);
- einem Ausgang mit einem ersten (A1) und einem zweiten Ausgangsanschluss (A2) zum Übergeben von Steuersignalen an das elektronische Vorschaltgerät (22); und
- eine Verarbeitungsvorrichtung (18, 20, OPT1, OPT2, C1, Z1, R2, C2, R3, S1), die zwischen den Steuereingang (SA1, SA2) und den Ausgang (A1, A2) gekoppelt ist, wobei die Verarbeitungsvorrichtung (18, 20, OPT1, OPT2, C1, Z1, R2, C2, R3, S1) eine Umpolvorrichtung (18) umfasst, die ausgelegt ist, ein am Steuereingang (SA1, SA2) angelegtes Signal in eine vorgebbare Polung zu bringen;
**dadurch gekennzeichnet,**
**dass** seriell zu zumindest einem der Steueranschlüsse (SA1; SA2) ein PTC-Element (16) gekoppelt ist.

2. Schnittstelle (10) nach Anspruch 1,
**dadurch gekennzeichnet,**
**dass** die Umpolvorrichtung (18) einen Gleichrichter umfasst mit einem Eingang mit einem ersten und einem zweiten Gleichrichtereingangsanschluss und mit einem Ausgang mit einem ersten (GA1) und einem zweiten Gleichrichterausgangsanschluss (GA2), wobei der erste Gleichrichtereingangsanschluss mit dem ersten Steueranschluss (SA1) und der zweite Gleichrichtereingangsanschluss mit dem zweiten Steueranschluss (SA2) gekoppelt ist.

3. Schnittstelle (10) nach einem der Ansprüche 1 oder 2,
**dadurch gekennzeichnet,**
**dass** sie ein spannungsbegrenzendes Bauteil (17), insbesondere einen Varistor, eine Zenerdiode oder eine Suppressordiode, umfasst, das zwischen den ersten (SA1) und den zweiten Steueranschluss (SA2) gekoppelt ist.

4. Schnittstelle (10) nach Anspruch 3,
**dadurch gekennzeichnet,**
**dass** das PTC-Element (16) zwischen einen Anschluss des spannungsbegrenzenden Bauteils (17) und den ersten (SA1) oder den zweiten Steueranschluss (SA2) gekoppelt ist.

5. Schnittstelle (10) nach einem der vorhergehenden Ansprüche,
**dadurch gekennzeichnet,**
**dass** die Verarbeitungsvorrichtung (18, 20, OPT1, OPT2, C1, Z1, R2, C2, R3, S1) mindestens einen elektronischen Schalter (S1) umfasst, dessen Strecke Bezugselektrode - Arbeitselektrode zwischen den ersten (GA1) und den zweiten Gleichrichterausgangsanschluss (GA2) gekoppelt ist.

6. Schnittstelle (10) nach einem der vorhergehenden Ansprüche,
**dadurch gekennzeichnet,**
**dass** die Verarbeitungsvorrichtung (18, 20, OPT1, OPT2, C1, Z1, R2, C2, R3, S1) die Serienschaltung eines ersten Optokopplers (OPT1) und eines spannungsbegrenzten Energiespeichers (C1, Z1) umfasst, wobei diese Serienschaltung seriell zwischen den ersten (GA1) und den zweiten Gleichrichterausgangsanschluss (GA2) gekoppelt ist, wobei die Fotozelle des ersten Optokopplers (OPT1) zwischen den ersten (A1) und den zweiten Ausganganschluss (A2) gekoppelt ist.

7. Schnittstelle (10) nach einem der vorhergehenden Ansprüche,
**dadurch gekennzeichnet,**
**dass** sie weiterhin umfasst:
einen Signaleingang mit einem ersten (SE1) und einem zweiten Signalanschluss (SE2) zum Empfangen von Signalen vom elektronischen Vorschaltgerät (22).

8. Schnittstelle (10) nach einer Kombination der Ansprüche 5 bis 7,
**dadurch gekennzeichnet,**
**dass** die Verarbeitungsvorrichtung (18, 20, OPT1, OPT2, C1, Z1, R2, C2, R3, S1) einen zweiten Optokoppler (OPT2) umfasst, wobei die Leuchtdiode des zweiten Optokopplers (OPT2) zwischen den ersten (SE1) und den zweiten Signalanschluss (SE2) gekoppelt ist, wobei der erste Anschluss der Fotozelle des zweiten Optokopplers (OPT2) mit dem spannungsbegrenzten Energiespeicher (C1, Z1) gekoppelt ist, wobei der zweite Anschluss der Fotozelle des zweiten Optokopplers (OPT2) mit der Steuerelektrode des elektronischen Schalters (S1) gekoppelt ist.

9. Schnittstelle (10) nach einem der Ansprüche 6 bis 8,
**dadurch gekennzeichnet,**
**dass** zwischen den ersten Gleichrichterausgangsanschluss (GA1) und den ersten Optokoppler (OPT1) eine Stromquelle (20) gekoppelt ist.

10. Schnittstelle (10) nach einem der vorhergehenden Ansprüche,
**dadurch gekennzeichnet,**
**dass** das PTC-Element (16) ein PPTC-Element ist.

11. Schnittstelle (10) nach einem der vorhergehenden Ansprüche,
**dadurch gekennzeichnet,**
**dass** das PTC-Element (16) derart dimensioniert ist,
**dass** bei einem Kurzschluss innerhalb der Schnittstelle (10) und gleichzeitig zwischen dem ersten (SA1) und
dem zweiten Steueranschluss (SA2) angelegter Netzspannung (U_{N}) der Eingangsstrom auf einen vorgebbaren Grenzwert begrenzt wird.

12. Schnittstelle (10) nach Anspruch 11,
**dadurch gekennzeichnet,**
**dass** der vorgebbare Grenzwert kleiner gleich dem Sicherungswert einer Sicherung des Speisenetzes der Schnittstelle (10) ist.

13. Schnittstelle (10) nach einem der vorhergehenden Ansprüche,
**dadurch gekennzeichnet,**
**dass** die Schnittstelle (10) auf einen maximalen Stromwert ausgelegt ist, wobei das PTC-Element (16) derart dimensioniert ist, dass bei fehlerhafter Strombegrenzung des an den Steuereingang (SA1, SA2) anzukoppelnden Steuergeräts (12) dieser maximale Stromwert nicht überschritten wird.

14. Schnittstelle (10) nach einem der vorhergehenden Ansprüche,
**dadurch gekennzeichnet,**
**dass** zumindest der Steuereingang (SA1, SA2) weiterhin zum Koppeln mit einem Steuergerät, insbesondere einem DALI-Steuergerät (12), ausgelegt ist.
